# EUROPEAN PATENT SPECIFICATION

(11) **EP 2 178 301 B1**
(45) Date of publication and mention of the grant of the patent: **25.11.2015**
(21) Application number: 09173131.5
(22) Date of filing: 15.10.2009
(51) Int. Cl.: H04N 19/139, H04N 19/176, H04N 19/40, H04N 19/433, H04N 19/56, H04N 19/61

(54) **Transcoding device and transcoding method**
Trascodierungsvorrichtung und Transcodierungsverfahren
Dispositif de transcodage et procédé de transcodage

(30) Priority: 16.10.2008 JP 2008267862
(43) Date of publication of application: 21.04.2010
(73) Proprietor: FUJITSU LIMITED, Kawasaki-shi, Kanagawa 211-8588 (JP)
(72) Inventor: Kazui, Kimihiko, Kawasaki-shi, Kanagawa 211-8588 (JP); Terashima, Yoshihiro, Fukuoka-shi, Fukuoka 814-8588 (JP); Tsukuda, Noriaki, Fukuoka-shi, Fukuoka 814-8588 (JP); Nakagawa, Akira, Kawasaki-shi, Kanagawa 211-8588 (JP)
(74) Representative: Hoffmann Eitle

(56) References cited:
- WO-A1-2006/129518
- US-A1- 2008 101 473
- CHANG Y-C ET AL: "Advances in Hardware Architectures for Image and Video Coding-A Survey" PROCEEDINGS OF THE IEEE, IEEE. NEW YORK, US LNKD- DOI:10.1109/JPROC.2004.839600, vol. 93, no. 1, 1 January 2005 (2005-01-01), pages 184-197, XP011123863 ISSN: 0018-9219
- JEONGNAM YOUN ET AL: "Adaptive motion vector refinement for high performance transcoding" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US LNKD- DOI:10.1109/ICIP.1998.727334, vol. 3, 4 October 1998 (1998-10-04), pages 596-600, XP010586804 ISBN: 978-0-8186-8821-8
- CHRISTOPOULOS C ET AL: "Video transcoding architectures and techniques: an overview" IEEE SIGNAL PROCESSING MAGAZINE, IEEE SERVICE CENTER, PISCATAWAY, NJ, US LNKD- DOI:10.1109/MSP.2003.1184336, vol. 20, no. 2, 1 March 2003 (2003-03-01), pages 18-29, XP011095789 ISSN: 1053-5888

## Description

### FIELD

The embodiments discussed herein are directed to a transcoding device that re-encodes an encoded image into another encoded-format image and a transcoding method.

### BACKGROUND

Video data generally contain a large amount of information, and it would be very costly if such data are stored in a medium or transmitted over a network without modification. Therefore, conventionally, many technical developments and standardization efforts have been widely made to compress-code video data using lossless or lossy compression techniques. Typical examples include the MPEG-1, the MPEG-2, the MPEG-4, and the MPEG-4 AVC/H.264, all of which are standardized by the Moving Picture Experts Group (MPEG).

In these standards, inter-frame motion prediction is adopted in coding. In the coding with the inter-frame motion prediction, highly correlative portions of frames are searched and positional difference (motion vectors) and pixel value difference (prediction errors) of the portions are coded.

In recent years, as various encoding methods of video data are developed and devices that performs recording, transmission, and display are diversified, there is highly required a transcoding function for converting video data encoded in a predetermined encoding format into another encoding format video data, for example, converting an MPEG-2 format video data into an MPEG-4 Avc/H.264 format video data.

For example, when video data of an MPEG-2 format is converted into video data of an MPEG-4 AVC/H,264 format, a transcoding device having such a transcoding function decodes the video data of the MPEG-2 format and then encodes the decoded video data into the MPEG-4 video data that can be further compressed.

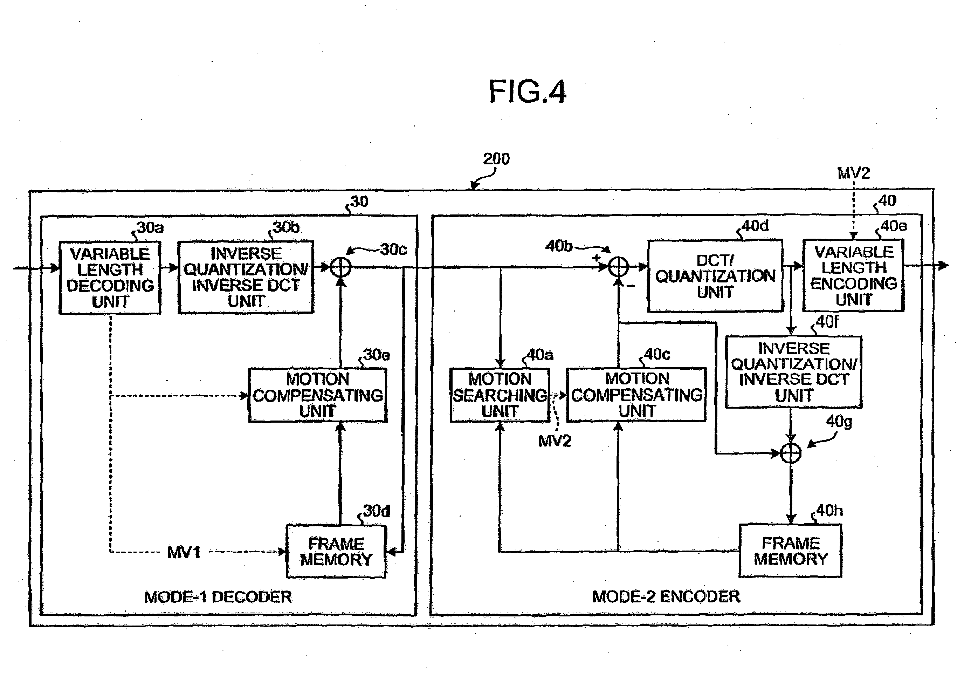

In other words, the transcoding device has a tandem connection structure, in which a decoder and an encoder operate independently from each other. For this reason, the transcoding device has two frame memories for the decoder and the encoder, each storing therein reference images (see FIG. 4). The frame memory for decoder stores therein decoded results of video data encoded in a first encoding format as reference images. Moreover, the frame memory for encoder stores therein decoded results of video data encoded in a second encoding format as reference images.

Specifically, a transcoding device 200 includes a format-1 (for example, MPEG-2 format) decoder 30 and a format-2 (for example, MPEG-4 AVC/H.264 format) encoder 40 as illustrated in FIG. 4. Under such a structure, when the format-1 decoder 30 of the transcoding device 200 receives video data encoded in a first encoding format, the mode-1 decoder 30 performs variable length decoding on a quantized DCT coefficient and a motion vector (MV1) for each macroblock of the received video data, by using a variable length decoding unit 30a. Then, the format-1 decoder 30 performs inverse quantization and inverse DCT operation on a quantized DCT coefficient discrete cosine transformed and quantized in the first encoding format, by using an inverse quantization/inverse DOT unit 30b.

The format-1 decoder 3D of the transcoding device reads a small-area image, which is indicated by the motion vector MV1, from a frame memory 30d for decoder, and performs a motion compensation by using the read small-area image as a reference image, with use of a motion compensating unit 30e. (Generally, each macroblock can have two motion vectors. One motion vector is for forward motion compensation. Another motion vector is for backward motion compensation. Each motion vector can have different reference images.) Then, the format-1 decoder 30 of the transcoding device adds the quantized DCT coefficient obtained after the inverse quantization and inverse DCT operation to the reference image having been subjected to the motion compensation, and generates a decode image. The format-1 decoder 30 outputs the decode image to the format-2 encoder 40 of the transcoding device and also stores the decode image in the frame memory 30d for decoder.

Next, the method-2 encoder 40 of the transcoding device searches for a motion vector to determine a motion vector MV2 by using the received decoded image of the first encoding format as an input image and using a local decoded image of the second encoding format stored in a frame memory 40h for encoder as a reference image, with use of a motion searching unit 40a.

Next, a motion compensating unit 40c performs motion compensation on the reference image stored in the frame memory 40h for encoder by using the motion vector MV2 searched by the motion searching unit 40a. Then, a subtracter 40b performs subtraction on the decoded image of the first encoding format and a predictive pixel output from the motion compensating unit 40c to obtain a predictive error signal.

Next, a DCT/quantization unit 40d performs DCT operation and quantization on the predictive error signal output from the subtracted 40b to obtain a quantized DCT coefficient. The quantized DCT coefficient that is an output of the DCT/quantization unit 40d is output as encoded data of the second format that is variable length encoded by using a variable length encoding unit 40e.

Moreover, the format-2 encoder 40 of the trans coding device performs inverse quantization and inverse DCT operation on the quantized DCT coefficient output from the DCT/quantization unit 40d to obtain a re-predictive error signal by using an inverse quantization/inverse DCT unit 40f. Next, an adder 40g adds the re-predictive error signal to the predictive image to obtain a local decoded image of the second encoding format and stores the local decoded image in the frame memory 40h for encoder.

Tn order to lower a used amount of a memory for encoder in the transcoding device 200 as described above, a method for recalculating a motion vector based on a motion vector included in an encoded video data before transcoding has been known as disclosed in, for example, Japanese Laid-open Patent Publication No. 2003-9158. The structure of the transcoding device is similar to that of FIG. 4, in which a decoder and an encoder operate independently from each other.

Specifically, the motion searching unit of the mode-2 encoder of the transcoding device receives, from the mode-1 decoder, the motion vector included in the encoded video data before transcoding, narrows a search range centered around a point indicated by the motion vector, and re-searches a motion vector by using the reference image stored in the frame memory for encoder.

However, in the technique in which the decoder and encoder as described above operate independently from each other, the decoder and the encoder have their respective frame memories, and motion compensation in the decoder and motion search and compensation in the encoder are independently performed. Therefore, the conventional technique has a problem that a circuit scale, a used amount of memory, and a memory bandwidth increase and thus a product cost is high.

Similarly, in the technique in which recalculating a motion vector based on a motion vector included in an encoded video data before transcoding, the decoder and the encoder have their respective frame memories, and a motion vector is re-searched by using the reference image stored in the frame memory for encoder. Therefore, the conventional technique has a problem that a circuit scale, a used amount of memory, and a memory bandwidth increase and thus a product cost is high.

Moreover, in a technique for reducing the number of the above-described frame memories, the encoder performs a motion compensation process by using motion vector information included in an encoded video data before transcoding. Accordingly, for example, when video data in an MPEG-2 format is converted into video data in an MPEG-4 AVC/H.264 format, motion compensation is performed by not using a high-accuracy motion vector in the MPEG-4 AVC/H.264 but using the MPEG-2 motion vector without conversion. As a result, there is a problem that an image quality of a transcoded moving image degrades.

WO 2006/129518 A1 shows a method of gaining access to a memory serving as a transcoder, which includes a decoding unit, a memory unit, and a motion searcher unit. Therein, the decoding unit decodes encoded data D1 and writes decoded 2D image data into the memory unit. The decoding unit further extracts information about motion vectors and inputs data D3 into the motion searcher unit.

Christopoulus et al. "Video transcoding architectures and techniques: An overview", IEEE Signal Processing, Vol. 20, pp 18-29 (2003) provides an overview over video transcoding architectures and techniques, showing a cascaded pixel-domain transcoding architecture, an open-loop architecture, and a closed-loop architecture, and further discusses the concept of motion vector refinement.

### SUMMARY

The present invention is made to solve the above described problem in the conventional technique, and an object of the invention is to reduce a circuit scale, a memory band width, and a used amount of memory, thereby lowering a product cost without degrading an image quality of a transcoded video data.

According to an aspect of the invention, a transcoding device includes a decoding unit for singly performing a decoding operation; and an encoding unit for singly performing an encoding operation, wherein the decoding unit is adapted to decode both motion vectors of macroblocks and images from encoded images in a first encoding format; and comprises a decoded image storing unit adapted to store therein the decoded motion vectors of macroblocks and the decoded images generated by the decoding unit; and wherein the encoding unit comprises: a vector searching unit adapted to search for motion vectors of macroblocks for encoding in a second encoding format by using the decoded images in the first encoding format stored in the decoded image storing unit as reference images and by using the decoded motion vectors of macroblocks as original points, and adapted to receive the decoded motion vectors from a variable length decoding unit that performs variable length decoding on a quantized DCT coefficient and the decoded motion vectors for each macroblock of the received video data; and a motion compensating unit adapted to read, from the decoded image storing unit, areas in the decoded images, which are indicated by the motion vectors of macroblocks for which the vector searching unit has searched, and to perform motion compensation by using the areas in the decoded images and the motion vectors of macroblocks for which the vector searching unit has searched.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 is a block diagram illustrating a structure of a transcoding device according to a first embodiment;
FIG. 2 is a diagram for explaining a small-area image that is acquired for motion compensation and motion search;
FIG. 3 is a flowchart for explaining a processing procedure of the transcoding device according to the first embodiment; and
FIG. 4 is a diagram for explaining a conventional art.

### DESCRIPTION OF EMBODIMENTS

Preferred embodiments of a transcoding device and a transcoding method according to the present invention will be explained in detail below with reference to the accompanying drawings.

### [a] First Embodiment

In the explanation below, a structure of a transcoding device according to a first embodiment of the present invention will be explained at first, and the process performed thereby will then follow. Finally, effects of the first embodiment will be described.

### (Structure of Transcoding Device)

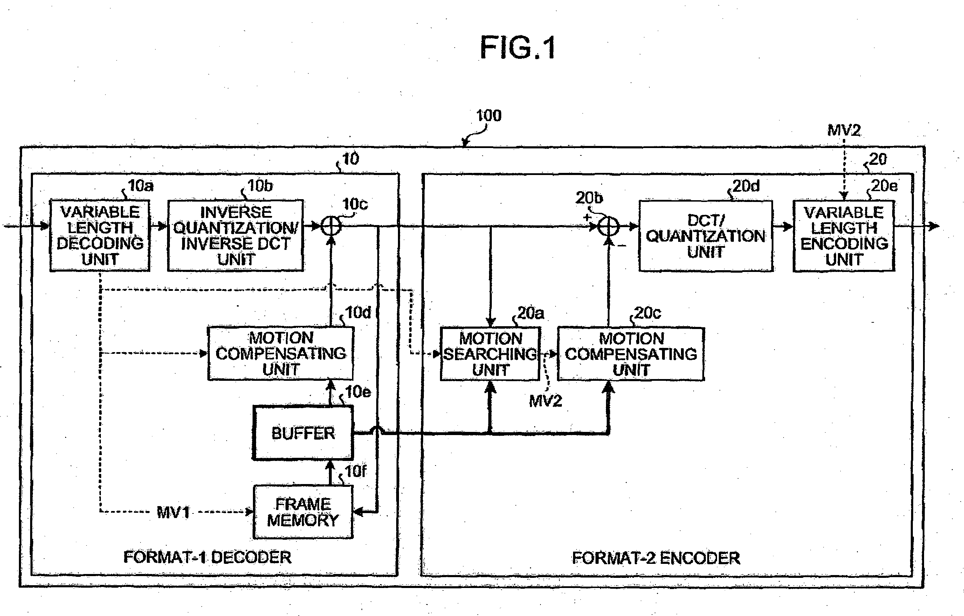

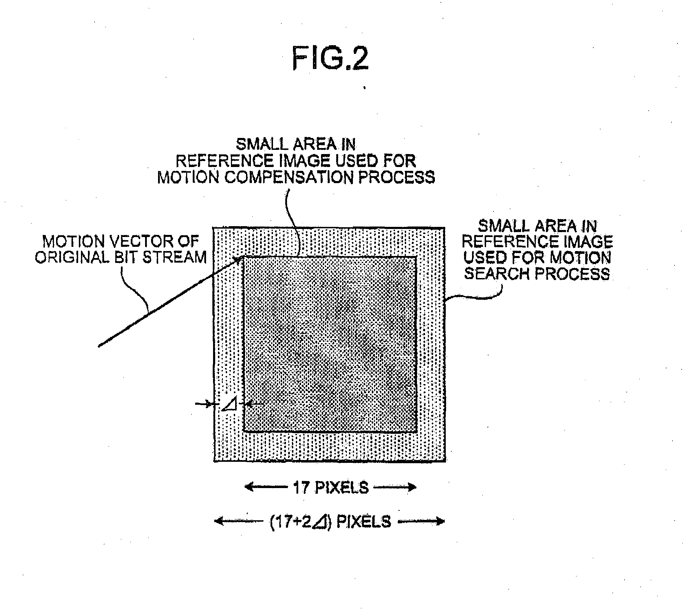

A structure of a transcoding device 100 will be explained with reference to FIG. 1. FIG. 1 is a block diagram illustrating a structure of the transcoding device 100 according to the first embodiment. FIG. 2 is a diagram for explaining a small-area image that is acquired for motion compensation and motion search.

As illustrated in FIG. 1, the transcoding device 100 includes a format-1 (an encoding format before transcoding) decoder 10 and a format-2 (an encoding format after transcoding) encoder 20. Hereinafter, a process of each unit will be explained.

The format-1 decoder 10 is a decoder that can singly perform a decoding operation. The format -1 decoder 10 decodes motion vectors of macroblocks in encoded images encoded in a first encoding format and also decodes the encoded images. Particularly the format-1 decoder 10 includes a variable length decoding unit 10a, an inverse quantization/inverse DCT unit 10b, an adder 10c, a motion compensating unit 10d, a buffer 10e, and a frame memory 10f.

The variable length decoding unit 10a receives video data encoded in the first encoding format. Then, the variable length decoding unit 10a performs variable length decoding on a quantized DCT coefficient and a motion vector (MV1) for each macroblock of the received video data. In this description, each macroblock is supposed to have only forward motion vector. After that, the variable length decoding unit 10a transmits the quantized DCT coefficient to the inverse quantization/inverse DCT unit 10b and transmits the motion vector (MV1) to the motion compensating unit 10d and a motion searching unit 20a to be described below.

The inverse quantization/inverse DCT unit 10b performs inverse quantization and inverse DCT operation on the quantized IDCT coefficient obtained after DCT operation and quantization in the first encoding format. Then, the inverse quantization/inverse DCT unit 10b outputs the result thereof to the adder 10c.

The adder 10c adds the output of the inverse quantization/inverse DCT unit 10b to a result of a first motion compensation process output from the motion compensating unit 10d and generates a decoded image for each macroblock. Then, the adder 10c outputs the generated decoded images to the format-2 encoder 20.

The motion compensating unit 10d performs motion compensation by using a small-area image indicated by the motion vector (MV1) in a reference image output from the buffer 10e to be described below.

The buffer 10e has a higher reading speed than that of the frame memory 10f. The buffer 10a acquires, from the frame memory 10f, the small area indicated by the motion vector (MV1) output from the variable length decoding unit 10a and an area having a width of Δ pixels apart from the top, bottom, left, and right of the small area (see FIG. 2) and stores therein the area. Moreover, the motion compensating unit 10d to be described below reads the small area indicated by the motion vector (MV1) from the buffer 10e.

Moreover, the motion searching unit 20a to be described below reads, from the buffer 10e, the small area indicated by the motion vector (MV1) and the area having a width of Δ pixels apart from the top, bottom, left, and right of the small area. Moreover, a motion compensating unit 20c to be described below reads, from the buffer 10e, a small area indicated by a motion vector (MV2) for which the motion searching unit 20a searches.

The frame memory 10f stores therein the decoded motion vector and the generated decoded images. Specifically, the frame memory 10f stores therein a decoded result of video data encoded in the first encoding format for each macroblock.

In this case, the frame memory 10f is shared for the format-1 decoder 10 and the format-2 encoder 20. In other words, the format-2 encoder 20 re-searches for the motion vector of a macroblock by using the decoded images stored in the frame memory for decoder as a reference image, and performs motion compensation (hereinafter, it will be explained in detail with reference to FIG. 2). In this way, because it is not necessary that the encoder reconstitutes a local decoded image, the encoder does not require a frame memory-

The format-2 encoder 20 is an encoder that can singly perform an encoding operation. Particularly, the format-2 encoder 20 includes the motion searching unit 20a, a subtractor 20b, the motion compensating unit 20c, a DCT/quantization unit 20d, and a variable length encoding unit 20e.

The motion searching unit 20a searches for the re search motion vector of a macroblock by using the stored decoded image as a reference image and using the motion vector of the same macroblock stored in the frame memory 10f (or the buffer 10e).

Specifically, the motion searching unit 20a receives the decoded images of the first encoding format output from the adder 10c, reads, from the buffer 10e, the small area (macroblock) indicated by the motion vector (MV1) and the area having a width of Δ pixels apart from the top, bottom, left, and right of the small area, and receives the motion vector (MV1) from the variable length decoding unit 10a,

Then, the motion searching unit 20a performs a motion vector search by using the decoded image of the first encoding format as a predictive image, using the small area indicated by the motion vector and the area having a width of Δ pixels apart from the top, bottom, left, and right of the small area as a reference image, and using the motion vector output from the variable length decoding unit 10a as an original point. After that, the motion searching unit 20a determines the motion vector (MV2) searched for and outputs the motion vector (MV2) to the motion compensating unit 20c.

A specific example is explained. When an MPEG-2 format video data is converted into an MPEG-4 AvC/H.264 format video data, the motion searching unit 20a re-searches a motion vector of quarter-pel precision in the encoder without using a motion vector of half-pel precision in an MPEG-2 format. For this reason, the transcoding device 100 can maximally utilize the motion compensation extended by using a motion vector in an MPEG-4 AVC/H.264 format. Accordingly, the transcoding device 100 can reduce a circuit scale and a used amount of memory and thus lower a product cost without degrading an image quality of a transcoded video data.

The subtractor 20b performs subtraction on the output of the adder 10c that is the decoded image of the first encoding format and the predictive image output from the motion compensating unit 20c to be described below, and obtains a predictive error signal. Then, the subtractor 20b transmits the predictive error signal to the DCT/quantization unit 20d.

The motion compensating unit 20c reads an area in the decoded image indicated by the searched re-search motion vector from the buffer 10e, and performs motion compensation by using the area in the decoded image and the re-search motion vector.

Specifically, the motion compensating unit 20c receives the motion vector (MV2) from the motion searching unit 20a and reads a small area indicated by the motion vector from the buffer 10e for each macroblock. Then, the motion compensating unit 20c performs motion compensation and generates a predictive image by using the small areas indicated by the read motion vector and the motion vector. After that, the motion compensating unit 20c outputs the generated predictive image to the subtractor 20b.

In other words, the transcoding device 100 acquires the decoded result of video data encoded in the first encoding format from the format-1 decoder 10 and performs a motion vector search process and a motion compensation process, instead of providing a frame memory for storing therein a decoded result (a reference image) of video data encoded in the second encoding format in the format-2 encoder 2D. Specifically, the format-2 encoder 20 of the transcoding device 100 acquires, from the format-1 decoder 10, the small area indicated by the motion vector included in the encoded video data before transcoding and the area having a width of Δ pixels apart from the top, bottom, left, and right of the small area, as a reference image, among the decoded results of the video data encoded in the first encoding format, and re-searches a motion vector. Then, the format-2 encoder 20 of the transcoding device 100 performs motion compensation by using the small area indicated by the re-searched motion vector (MV2) output from the motion searching unit 20a.

In this manner, because the format-2 encoder 20 of the transcoding device 100 uses the decoded result of the video data encoded in the first encoding format as a reference image instead of the decoded result of the video data encoded in the second encoding format. Therefore, the transcoding device 100 may degrade an image quality due to a difference between both decoded results. However, the transcoding device 100 can realize a motion vector re-search process and a motion compensation process by using only a frame memory for decoder without providing a frame memory for encoder. Accordingly, the transcoding device 100 can reduce a circuit scale and a used amount of memory.

A small-area image to be acquired for motion compensation and motion search is now explained with reference to FIG. 2. In the motion search process performed by the decoder, as illustrated in FIG. 2, the motion searching unit 20a acquires a small area in a reference image, which is indicated by a motion vector (the motion vector MV1) of an original bit stream, from the frame memory 10f.

The motion searching unit 20a can set a search start point to the motion vector of the original bit stream in the motion vector re-search process performed by the encoder. Therefore, the motion searching unit 20a reads an extended small area, which is obtained by extending the small area in a reference image to include the area having a width of Δ pixels apart from the top, bottom, left, and right of the small area, from the frame memory 10f when reading the small area in the reference image from the frame memory 10f,

In this way, a reference image extended to include the area having a width of Δ pixels apart from the top, bottom, left, and right of the small area can be also acquired at the same time and searched as a reference image for re-searching a motion vector. In the motion compensation process performed by the encoder, a small area indicated by the re-search motion vector determined in the re-searching process is read. In this case, the small area indicated by the re-search motion vector is 17 pixels by 17 pixels.

In an example as illustrated in FIG. 2, each of the first and second encoding formats is an MPEG-2 format, and motion compensation is performed per macroblock of 16 × 16 pixels in luma components. The reason that 17 × 17 pixels are used for the motion compensation process is that 17 × 17 pixels are required to calculate a pixel value at 1/2 pixel position.

The DCT/quantization unit 20d performs a DCT operation on the predictive error signal output from the subtraction unit 20b and obtains a DCT coefficient. Then, the DCT/quantization unit 20d performs a quantization operation on the DCT coefficient and obtains a quantized DCT coefficient. After that, the DCT/quantization unit 20d outputs the quantized DCT coefficient to the variable length encoding unit 20e.

The variable length encoding unit 20e performs a variable length-encoding on the quantizes DCT coefficient transmitted from the DCT/quantization unit 20d and the motion vector output from the motion searching unit 20a.

### (Process performed by Transcoding Device)

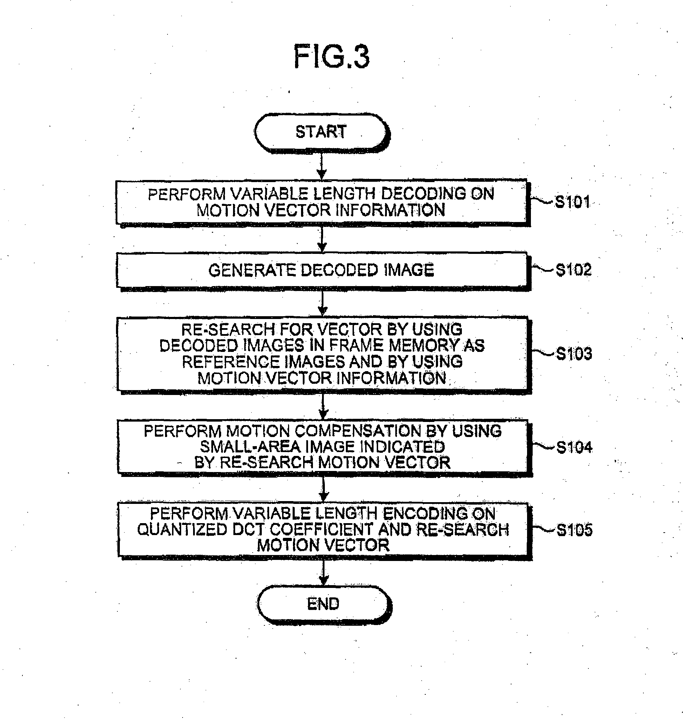

Next, a process performed by the transcoding device 100 according to the first embodiment will be explained with reference to FIG. 3. FIG. 3 is a flowchart for explaining a process operation of the transcoding device 100 according to the first embodiment.

As illustrated in FIG. 3, the transcoding device 100 performs variable length decoding on a motion vector (MV1) for each macroblock of video data encoded in the first encoding format (Step S101), and generates a decoded image (Step S102). Then, the transcoding device 100 stores the motion vector and the decoded image in the frame memory 10f.

Next, the transcoding device 100 uses the decoded image stored in the frame memory 10f as a reference image and also uses motion vector information, in order to re-search a motion vector (Step S103). Then, the transcoding device 100 reads, from the buffer 10e, a small area indicated by the re-search motion vector of the decoded image. Then, the motion compensating unit 20c performs motion compensation by using the small-area image indicated by the re-searched motion vector (Step S104).

After that, the transcoding device 100 acquires a predictive error signal, performs DCT and quantization operations on the predictive error signal, and obtains a quantized DCT coefficient. Then, the transcoding device 100 performs variable length encoding on the quantized DCT coefficient and the re-search motion vector (Step S105).

### (Effect of First Embodiment)

As described above, the transcoding device 100 decodes a motion vector obtained from encoded images encoded in the first encoding format, also decodes the encoded images to generate decoded images, and stores the decoded motion vector and the generated decoded images in the frame memory 10f. Then, the trans coding device 100 searches for a re-search motion vector by using the decoded image stored in the frame memory 10f as a reference image and using the motion vector stored in the frame memory 10f. After that, the transcoding device 100 reads, from the frame memory 10f, an area in the decoded image, which is indicated by the searched re-search motion vector, and performs motion compensation by using the area in the decoded image and the searched re-search motion vector. Accordingly, the transcoding device 100 can achieve a motion vector research process by using only the frame memory for decoder when transcoding a moving image. Therefore, the transcoding device 100 can reduce a circuit scale and a used amount of memory and can lower a product cost without degrading an image quality of a transcoded moving image.

In other words, for example, when a moving image of an MPEG-2 format is converted into a moving image of an MPEG-4 AVC/H.264 format, the transcoding device 100 performs a motion vector re-search process of quarter-pel precision in the encoder by not using a motion vector of half-pel precision in an MPEG-2 format. The transcoding device 100 maximally utilizes the motion compensation extended by using the MPEG-4 AVC/H.264 motion vector. Accordingly, the transcoding device 100 can reduce a circuit scale and a used amount of memory and thus can lower a product cost without degrading an image quality of a transcoded moving image.

According to the first embodiment, the transcoding device 100 generates a decoded image for each macroblock, stores the decoded image in the frame memory 10f for each macroblock, and searches a re-search motion vector by using the motion vector stored in the frame memory 10f as an original point. Then, the transcoding device 100 reads an area in a decoded image indicated by the searched re-search motion vector from the frame memory 10f for each macroblock and performs motion compensation for each macroblock. Therefore, the transcoding device 100 can perform a motion compensation process for each macroblock.

According to the first embodiment, the transcoding device 100 searches for a re-search motion vector by using a decoded image area, which is obtained by extending the area in the decoded image indicated by the motion vector stored in the frame memory 10f, as a search range. Therefore, the transcoding device 100 can search an extended reference image and can re-search for an appropriate vector.

According to the first embodiment, the transcoding device 100 includes a buffer that has a higher reading speed than that of the frame memory 10f and temporarily stores therein the motion vector and the decoded image used for the motion re-search process and the motion compensation process among the motion vectors and the decoded images stored in the frame memory 10f, Therefore, the transcoding device 100 can improve a processing speed compared with reading the motion vector and the decoded image from the frame memory.

### [b] Example

Although the embodiment of the present invention has been explained as described above, the present invention may be realized by using various different structures in addition to the embodiment as described above. Hereinafter, an example included in the present invention will be explained.

System Structure, etc.

Each of the structural components of the units illustrated in the drawings is only conceptual in function, and is not necessarily physically configured as illustrated in the drawings. That is, the specific patterns of distribution and integration of the units are not limited to those illustrated in drawings. All or a part of the components can be functionally or physically distributed or integrated in arbitrary units, in accordance with various loads and the sate of use. For example, the variable length decoding unit 10a and the inverse quantization/inverse DCT unit 10b may be integrated. Furthermore, all or arbitrary part of the processing functions performed by the units can be achieved by a Central Processing Unit (CPU) and a computer program analyzed and executed by the CPU, or can be achieved as hardware using wired logics.

Moreover, among the processes described in the present embodiment, all or a part of the processes explained as being automatically performed may also be manually performed; or all or a part of the processes explained as being manually performed may also be automatically performed through a known method. In addition, the processing procedure, control procedure, specific names, information including various types of data or parameters described in the specification and illustrated in the drawings can be arbitrarily modified unless otherwise specified.

## Claims

1. A transcoding device (100), comprising:
a decoding unit (10) for singly performing a decoding operation; and
an encoding unit (20) for singly performing an encoding operation, wherein
the decoding unit (10) is adapted to decode both motion vectors (MV1) of macroblocks and images from encoded images in a first encoding format; and comprises
a decoded image storing unit (10f) adapted to store therein the decoded motion vectors (MV1) of macroblocks and the decoded images generated by the decoding unit (10); and wherein
the encoding unit (20) comprises:
a vector searching unit (20a) adapted to search for motion vectors (MV2) of macroblocks for encoding in a second encoding format, that is different from the first encoding format, by using the decoded images in the first encoding format stored in the decoded image storing unit (10f) as reference images and by using the decoded motion vectors (MV1) of macroblocks as original points, and adapted to receive the decoded motion vectors (MV1) from a variable length decoding unit (10a) that performs variable length decoding on a quantized DCT coefficient and the decoded motion vectors (MV1) for each macroblock of the received video data; and
a motion compensating unit (20c) adapted to read, from the decoded image storing unit (10f), areas in the decoded images, which are indicated by the motion vectors (MV2) of macroblocks for which the vector searching unit (20a) has searched, and to perform motion compensation by using the areas in the decoded images and the motion vectors (MV2) of macroblocks for which the vector searching unit (20a) has searched, and
a subtracting unit (20b) adapted to obtain a predictive error signal by subtracting predictive images for which the motion compensation is performed by the motion compensating unit (20c) and the decoded images,
a DCT/quantization unit (20d) adapted to perform a DCT operation on the predictive errors signal to obtain a DCT coefficient and to perform a quantization operation on the DCT coefficient to obtain a quantized DCT coefficient;
a coding unit (20e) adapted to perform variable length-encoding on the quantized DCT coefficient transmitted from the DCT/quantization unit (20d) and the motion vectors (MV2) output from the vector searching unit (20a).

2. The transcoding device (100) according to claim 1, wherein
the vector searching unit (20a) is adapted to search for the motion vectors of a macroblock in the second encoding format by using extended areas in the decoded images, which are obtained by extending the areas in the decoded images indicated by the decoded motion vectors of the macroblock stored in the decoded image storing unit (10f), as a search range.

3. The transcoding device (100) according to any one of claims 1 to 2, further comprising a buffer (10e) in the decoding unit (10) adapted to temporarily store therein a decoded area of image, which is used in the vector searching unit (20a) and the motion compensating unit (20c), among decoded areas of images stored in the decoded image storing unit (10f), wherein the buffer (10e) has a higher reading speed than the decoded image storing unit (10f).

4. A transcoding method comprising a decoding operation in a decoding unit (10) of a transcoding device (100) and an encoding operation in an encoding unit (20) of the transcoding device (100), wherein the decoding operation comprises:
decoding both motion vectors of macroblocks and images from encoded images in a first encoding format; storing both the decoded motion vectors of macroblocks and the decoded images in a decoded image storing unit (10f); and wherein the encoding operation comprises:
searching for motion vectors of macroblocks in a second encoding format, that is different from the first encoding format, by using the decoded images in the first encoding format stored in the decoded image storing unit (10f) as reference images and by using the decoded motion vectors as original points, the searching receives the decoded motion vectors from a variable length decoding unit (10a) that performs variable length decoding on a quantized DCT coefficient and the decoded motion vectors for each macroblock of the received video data; and
reading, from the decoded image storing unit (10f), areas in the decoded images, which are indicated by the motion vectors searched for in the searching, so as to perform motion compensation by using the areas in the decoded images and the motion vectors searched for in the searching, and
obtaining a predictive error signal by subtracting predictive images for which the motion compensation is performed and the decoded images, and
performing a DCT operation on the predictive errors signal to obtain a DCT coefficient and performing a quantization operation on the DCT coefficient to obtain a quantized DCT coefficient
perform variable length-encoding on the quantized DCT coefficient transmitted from the DCT/quantization unit (20d) and the searched motion vectors (MV2).

5. The transcoding method according to claim 4, wherein in the searching, the motion vectors of a macroblock in the second encoding format are searched for by using extended areas in the decoded images, which are obtained by extending the areas in the decoded images indicated by the decoded motion vectors of the macroblock stored in the decoded image storing unit (10f), as a search range.

6. The transcoding method according to any one of claims 4 to 5, further comprising temporarily storing a decoded
area of image, which is used in the searching and the reading, in a buffer (10e), among decoded areas of images stored in the decoded image storing unit (10f), wherein the buffer (10e) has a higher reading speed than the decoded image storing unit (10f).

## Patentansprüche

1. Transcodiervorrichtung (100), umfassend:
eine Decodiereinheit (10) zum selbstständigen Durchführen eines Decodierbetriebs; und
eine Codiereinheit (20) zum selbstständigen Durchführen eines Codierbetriebs, wobei
die Decodiereinheit (10) ausgebildet ist zum Decodieren von sowohl Bewegungsvektoren (MV1) von Makroblöcken und Bildern von codierten Bildern in einem ersten Codierformat; und umfassend
eine Decodiertes-Bild-Speichereinheit (10f), ausgebildet zum Speichern der decodierten Bewegungsvektoren (MV1) von Makroblöcken und der decodierten Bilder darin, die erzeugt werden durch die Decodiereinheit (10); und wobei
die Codiereinheit (20) umfasst:
eine Vektorsucheinheit (20a), ausgebildet zum Suchen nach Bewegungsvektoren (MV2) von Makroblöcken zum Codieren in einem zweiten Codierformat, das sich von dem ersten Codierformat unterscheidet, unter Verwendung der decodierten Bilder in dem ersten Codierformat, gespeichert in der Decodiertes-Bild-Speichereinheit (10f), als Referenzbilder, und durch Verwenden der decodierten Bewegungsvektoren (MV1) von Makroblöcken als ursprüngliche Punkte, und ausgebildet zum Empfangen der decodierten Bewegungsvektoren (MV1) von einer Variablen-Längen-Decodiereinheit (10a), die eine variable Längendecodierung an einem quantisierten DCT-Koeffizienten und den decodierten Bewegungsvektoren (MV1) für jeden Makroblock der empfangene Videodaten durchführt; und
eine Bewegungskompensationseinheit (20c), ausgebildet zum Lesen, aus der Decodiertes-Bild-Speichereinheit (10f), von Bereichen in den decodierten Bildern, die durch die Bewegungsvektoren (MV2) von Makroblöcken angezeigt werden, nach denen die Vektorsucheinheit (20a) gesucht hat, und zum Durchführen einer Bewegungskompensation unter Verwendung der Bereiche in den decodierten Bildern und der Bewegungsvektoren (MV2) von Makroblöcken, nach denen die Vektorsucheinheit (20a) gesucht hat, und
eine Subtraktionseinheit (20b), ausgebildet zum Erhalten eines prädiktiven Fehlersignals durch Subtrahieren prädiktiver Bilder, für die die Bewegungskompensation durch die Bewegungskompensationseinheit (20c) durchgeführt wird, und der decodierten Bilder,
eine DCT-/Quantisierungseinheit (20d), ausgebildet zum Durchführen eines DCT-Betriebs an dem prädiktiven Fehlersignal, zum Erhalten eines DCT-Koeffizienten und zum Durchführen eines Quantisierungsbetriebs an dem DCT-Koeffizienten, um einen quantisierten DCT-Koeffizienten zu erhalten;
eine Codiereinheit (20e), ausgebildet zum Durchführen eines variablen Längencodierens an dem quantisierten DCT-Koeffizienten, der übertragen wird von der DCT-/Quantisierungseinheit (20d), und den Bewegungsvektoren (MV2), die von der Vektorsucheinheit (20a) ausgegeben werden.

2. Transcodiervorrichtung (100) nach Anspruch 1, wobei die Vektorsucheinheit (20a) ausgebildet ist zum Suchen nach Bewegungsvektoren eines Makroblocks in dem zweiten Codierformat unter Verwendung erweiterter Bereiche in den decodierten Bildern, die erhalten werden durch Erweitern der Bereiche in den decodierten Bildern, die angezeigt werden durch die decodierten Bildvektoren des Makroblocks, gespeichert in der Decodiertes-Bild-Speichereinheit (10f), als ein Suchbereich.

3. Transcodiervorrichtung (100) nach einem der Ansprüche 1 bis 2, ferner mit einem Puffer (10e) in der Decodiereinheit (10), ausgebildet zum temporären Speichern darin eines decodierten Bereichs eines Bilds, der verwendet wird in der Vektorsucheinheit (20a) und der Bewegungskompensationseinheit (20c), unter decodierten Bereichen von Bildern, die in der Decodiertes-Bild-Speichereinheit (10f) gespeichert werden, wobei der Puffer (10e) eine höhere Lesegeschwindigkeit aufweist als die Decodiertes-Bild-Speichereinheit (10f).

4. Transcodierverfahren mit einem Decodierbetrieb in einer Decodiereinheit (10) einer Transcodiervorrichtung (10) und einem Codierbetrieb in einer Codiereinheit (20) der Transcodiervorrichtung (100), wobei der Decodierbetrieb umfasst:
Decodieren von sowohl Bewegungsvektoren von Makroblöcken als auch von Bildern von codierten Bildern in einem ersten Codierformat;
Speichern sowohl der decodierten Bewegungsvektoren von Makroblöcken als auch der decodierten Bilder in einer Decodiertes-Bild-Speichereinheit (10f); und wobei der Codierbetrieb umfasst:
Suchen nach Bewegungsvektoren von Makroblöcken in einem zweiten Codierformat, das sich von dem ersten Codierformat unterscheidet, unter Verwendung der decodierten Bilder in dem ersten Codierformat, gespeichert in der Decodiertes-Bild-Speichereinheit (10f), als Referenzbilder, und unter Verwendung der decodierten Bewegungsvektoren als ursprüngliche Punkte, wobei das Suchen die decodierten Bewegungsvektoren von einer Variablen-Längen-Decodiereinheit (10a) empfängt, die ein variables Längendecodieren an einem quantisierten DCT-Koeffizienten durchführt, und den decodierten Bewegungsvektoren für jeden Makroblock der empfangenen Videodaten; und
Lesen, aus der Decodiertes-Bild-Speichereinheit (10f), von Bereichen in den decodierten Bildern, die angezeigt werden durch die Bewegungsvektoren, nach denen in den Suchen gesucht wird, um eine Bewegungskompensation unter Verwendung der Bereiche in den decodierten Bildern und den Bewegungsvektoren durchzuführen, nach denen in dem Suchen gesucht wurde, und
Erhalten eines prädiktiven Fehlersignals durch Subtrahieren prädiktiver Bilder, für die die Bewegungskompensation durchgeführt wird, und der decodierten Bilder, und
Durchführen eines DCT-Betriebs an dem prädiktiven Fehlersignal, um einen DCT-Koeffizienten zu erhalten, und Durchführen eines Quantisierungsbetriebs an dem DCT-Koeffizienten, um einen quantisierten DCT-Koeffizienten zu erhalten,
Durchführen einer variablen Längencodierung an dem quantisierten DCT-Koeffizienten, der übertragen wird von der DCT-/Quantisierungseinheit (20d), und den gesuchten Bewegungsvektoren (MV2).

5. Transcodierverfahren nach Anspruch 4, wobei in den Suchen die Bewegungsvektoren eines Makroblocks in dem zweiten Codierformat gesucht werden, indem erweiterte Bereiche in den decodierten Bildern verwendet werden, die erhalten werden durch Erweitern der Bereiche in den decodierten Bildern, die angezeigt werden durch die decodierten Bewegungsvektoren des in der Decodiertes-Bild-Speichereinheit (10f) gespeicherten Makroblocks, als ein Suchbereich.

6. Transcodierverfahren nach einem der Ansprüche 4 bis 5, ferner mit einem temporären Speichern eines decodierten Bereichs eines Bilds, der verwendet wird in dem Suchen und dem Lesen, in einem Puffer (10e), unter decodierten Bereichen von Bildern, die in der Decodiertes-Bild-Speichereinheit (10f) gespeichert werden, wobei der Puffer (10e) eine höhere Lesegeschwindigkeit aufweist als die Decodiertes-Bild-Speichereinheit (10f).

## Revendications

1. Dispositif de transcodage (100), comportant :
une unité de décodage (10) pour effectuer individuellement une opération de décodage ; et
une unité de codage (20) pour effectuer individuellement une opération de codage, dans lequel
l'unité de décodage (10) est adaptée pour décoder à la fois des vecteurs de mouvement (MV1) des macroblocs et des images à partir d'images codées dans un premier format de codage ; et comporte
une unité de stockage d'images décodées (10f) adaptée pour y stocker les vecteurs de mouvement décodés (MV1) des macroblocs et des images décodées générés par l'unité de décodage (10) ; et dans lequel
l'unité de codage (20) comporte :
une unité de recherche de vecteurs (20a) adaptée pour rechercher des vecteurs de mouvement (MV2) de macroblocs pour un codage dans un second format de codage, qui est différent du premier format de codage, en utilisant les images décodées dans le premier format de codage stocké dans l'unité de stockage d'images décodées (10f) en tant qu'image de référence et en utilisant les vecteurs de mouvement décodés (MV1) des macroblocs en tant que points originaux, et adaptée pour recevoir les vecteurs de mouvement décodés (MV1) à partir d'une unité de décodage à longueur variable (10a) qui effectue un décodage à longueur variable sur un coefficient de DCT quantifié et les vecteurs de mouvement décodés (MV1) pour chaque macrobloc des données vidéo reçues ; et
une unité de compensation de mouvement (20c) adaptée pour lire, à partir de l'unité de stockage d'images décodées (10f), des zones dans les images décodées, qui sont indiquées par les vecteurs de mouvement (MV2) des macroblocs que l'unité de recherche de vecteurs (20a) a cherché, et pour effectuer une compensation de mouvement en utilisant les zones dans les images décodées et les vecteurs de mouvement (MV2) des macroblocs que l'unité de recherche de vecteur (20a) a cherché, et
une unité de soustraction (20b) adaptée pour obtenir un signal d'erreur prédictif en retranchant les images prédictives pour lesquelles la compensation de mouvement est effectuée par l'unité de compensation de mouvement (20c) et les images décodées,
une unité de DCT/quantification (20d) adaptée pour effectuer une opération de DCT sur le signal d'erreur prédictif pour obtenir un coefficient de DCT et pour effectuer une opération de quantification sur le coefficient de DCT pour obtenir un coefficient de DCT quantifié ;
une unité de codage (20e) adaptée pour effectuer un décodage à longueur variable sur le coefficient de DCT quantifié transmis depuis l'unité de DCT/quantification (20d) et les vecteurs de mouvement (MV2) délivrés depuis l'unité de recherche de vecteur (20a).

2. Dispositif de transcodage (100) selon la revendication 1, dans lequel
l'unité de recherche de vecteur (20a) est adaptée pour rechercher les vecteurs de mouvement d'un macrobloc dans le second format de codage en utilisant des zones étendues dans les images décodées, qui sont obtenues en étendant les zones dans les images décodées indiquées par les vecteurs de mouvement décodés du macrobloc stocké dans l'unité de stockage d'images décodées (10f), en tant que plage de recherche.

3. Dispositif de transcodage (100) selon l'une quelconque des revendications 1 à 2, comportant en outre une mémoire tampon (10e) dans l'unité de décodage (10) adaptée pour y stocker temporairement une zone décodée d'image, qui est utilisée dans l'unité de recherche de vecteur (20a) et l'unité de compensation de mouvement (20c), parmi les zones décodées des images stockées dans l'unité de stockage d'images décodées (10f), dans lequel la mémoire tampon (10e) possède une vitesse de lecture supérieure à l'unité de stockage d'images décodées (lOf).

4. Procédé de transcodage comportant une opération de décodage dans une unité de décodage (10) d'un dispositif de transcodage (100) et une opération de codage dans une unité de codage (20) du dispositif de transcodage (100), dans lequel l'opération de décodage comporte :
le décodage à la fois des vecteurs de mouvement des macroblocs et des images à partir des images codées dans un premier format de codage ;
le stockage à la fois des vecteurs de mouvement décodés des macroblocs et des images décodées dans une unité de stockage d'images décodées (10f) ; et dans lequel l'opération de codage comporte :
la recherche de vecteurs de mouvement des macroblocs dans un second format de codage, qui est différent du premier format de codage, en utilisant les images décodées dans le premier format de codage stocké dans l'unité de stockage d'images décodées (10f) en tant qu'images de référence et en utilisant les vecteurs de mouvement décodés en tant que points originaux, la recherche reçoit les vecteurs de mouvement décodés à partir d'une unité de décodage à longueur variable (10a) qui effectue un décodage à longueur variable sur un coefficient de DCT quantifié et les vecteurs de mouvement décodés pour chaque macrobloc des données vidéo reçues ; et
la lecture, à partir de l'unité de stockage d'images décodées (10f), de zones dans les images décodées, qui sont indiquées par les vecteurs de mouvement recherchés lors de la recherche, de manière à effectuer une compensation de mouvement en utilisant les zones dans les images décodées et les vecteurs de mouvement recherchés lors de la recherche, et
l'obtention d'un signal d'erreur prédictif en retranchant les images prédictives pour lesquelles la compensation de mouvement est effectuée et les images décodées, et
l'exécution d'une opération de DCT sur le signal d'erreur prédictif pour obtenir un coefficient de DCT et l'exécution d'une opération de quantification sur le coefficient de DCT pour obtenir un coefficient de DCT quantifié,
l'exécution d'un codage à longueur variable sur le coefficient de DCT quantifié transmis depuis l'unité de DCT/quantification (20d) et les vecteurs de mouvement recherchés (MV2).

5. Procédé de transcodage selon la revendication 4, dans lequel, lors de la recherche, les vecteurs de mouvement d'un macrobloc dans le second format de codage sont recherchés en utilisant des zones étendues dans les images décodées, qui sont obtenues en étendant les zones dans les images décodées et indiquées par les vecteurs de mouvement décodés du macrobloc stocké dans l'unité de stockage d'images décodées (10f), en tant que plage de recherche.

6. Procédé de transcodage selon l'une quelconque des revendications 4 à 5, comportant en outre le stockage temporaire d'une zone décodée d'image, qui est utilisée lors de la recherche et la lecture, dans une mémoire tampon (10e), parmi les zones décodées des images stockées dans l'unité de stockage d'images décodées (10f), dans lequel la mémoire tampon (10e) possède une vitesse de lecture supérieure à l'unité de stockage d'images décodées (10f).
